# FASCICULE DE BREVET EUROPEEN

(11) **EP 4 078 554 B1**
(45) Date de publication et mention de la délivrance du brevet: **29.10.2025**
(21) Numéro de dépôt: 20848845.2
(22) Date de dépôt: 17.12.2020
(51) Int. Cl.: G08G 1/0965, G08G 1/0967, G08G 1/0968, G01C 21/34

(54) **PROCÉDÉ DE GESTION D'UN ÉTAT D'URGENCE D'UN PREMIER VÉHICULE ET DISPOSITIF DE GESTION ASSOCIÉ**
VERFAHREN ZUM VERWALTEN EINES DRINGLICHKEITSZUSTANDS EINES ERSTEN FAHRZEUGS UND ZUGEHÖRIGE VERWALTUNGSVORRICHTUNG
METHOD FOR MANAGING A STATE OF URGENCY OF A FIRST VEHICLE AND ASSOCIATED MANAGEMENT DEVICE

(30) Priorité: 20.12.2019 FR 1915171
(43) Date de publication de la demande: 26.10.2022
(73) Titulaire: Orange, 92130 Issy-les-Moulineaux (FR)
(72) Inventeur: MONCOMBLE, Ghislain, 92326 CHÂTILLON CEDEX (FR); LEFEBVRE, Mathieu, 92326 CHÂTILLON CEDEX (FR)
(74) Mandataire: Cabinet Beau de Loménie
(86) Numéro de dépôt international: PCT/FR2020/052509
(87) Numéro de publication internationale: WO 2021/123647

(56) Documents cités:
- WO-A1-2017/151937
- WO-A1-2019/181844
- US-A1- 2017 116 849
- US-A1- 2017 364 069

## Description

### Domaine Technique

La présente invention se rapporte au domaine des véhicules et de l'assistance à la conduite d'un véhicule, et concerne plus particulièrement une technique de gestion d'un état d'urgence d'un véhicule.

### Technique antérieure

De façon connue, lorsqu'un véhicule d'intérêt général prioritaire en cours d'intervention (tel qu'une ambulance, un camion de pompier ou une voiture de police) circule sur une voie de circulation, il signale sa présence aux véhicules sur son trajet via un moyen d'alerte tel qu'une sirène ou un gyrophare.

Par usage et/ou pour respecter le code de la route, les véhicules alertés laissent alors passer le véhicule d'intérêt général prioritaire afin de faciliter son déplacement, par exemple en se rangeant sur le côté ou en cédant la priorité au niveau d'une intersection.

Cependant, les conducteurs des véhicules présents sur le trajet du véhicule d'intérêt général prioritaire peinent parfois à localiser le véhicule d'intérêt général prioritaire, et ainsi peuvent avoir du mal à déterminer s'ils doivent réaliser une manœuvre afin de laisser passer le véhicule d'intérêt général prioritaire. Par exemple, un conducteur entendant une sirène peut ne pas arriver à déterminer si le véhicule d'intérêt général prioritaire arrive en face ou par derrière. De même, un conducteur visualisant le signal lumineux d'un gyrophare peut avoir du mal à déterminer sur quelle voie circule le véhicule d'intérêt général prioritaire.

En outre, il n'existe actuellement pas de solution permettant d'adapter le trafic routier afin de laisser le passage à un véhicule qui n'est pas un véhicule d'intérêt général prioritaire (par exemple un véhicule de particulier), mais qui se trouve de manière exceptionnelle en état d'urgence (par exemple un véhicule transportant une femme sur le point d'accoucher ou un blessé, ou encore un véhicule transportant des techniciens d'intervention à la suite d'une détection d'une fuite de gaz, etc.). En effet, de tels véhicules n'ont pas de moyens d'alerte à leur disposition.

US 2017/364069 A1 décrit une méthode visant à adapter l'itinéraire d'un véhicule autonome après que ce dernier a détecté une urgence médicale d'un de ses occupants, afin qu'il se dirige vers un établissement de santé.

### Exposé de l'invention

La présente invention concerne un procédé de gestion d'un état d'urgence d'un premier véhicule selon la revendication 1.

Ainsi, grâce à l'invention, le véhicule est état d'urgence peut être localisé avec précision. L'état d'alerte envoyé audit au moins un élément de détection déclenche la détection du premier véhicule par ledit au moins élément de détection. En effet, le message d'alerte indique audit au moins un élément de détection que le premier véhicule est en état d'urgence et est susceptible de suivre une portion de voie au niveau de laquelle l'élément de détection se trouve. En outre, le message d'alerte comprenant un élément d'identification du premier véhicule, permet la détection du premier véhicule par l'élément de détection.

L'élément de détection ayant détecté le premier véhicule, adresse un message de localisation du premier véhicule, ce message de localisation étant utilisé pour confirmer ledit au moins un itinéraire potentiel du premier véhicule.

Selon un mode de réalisation, le procédé comporte les étapes suivantes :
réception d'un premier signalement de l'état d'urgence du premier véhicule,
- détermination d'une liste d'itinéraires potentiels comprenant au moins un itinéraire potentiel du premier véhicule, et
- envoi d'un message d'alerte à au moins un élément dit de détection, situé au niveau d'une voie de circulation, ledit au moins un élément de détection étant déterminé en fonction dudit au moins un itinéraire potentiel du premier véhicule.

Ainsi, le procédé selon l'invention permet ainsi d'adapter le trafic de véhicule afin de laisser passer tout type de véhicule en état d'urgence et pas simplement les véhicules d'intérêt général prioritaires. En outre, le procédé selon l'invention permet de localiser avec précision le véhicule en état d'urgence.

Dans un mode de réalisation, le premier signalement comporte un élément d'information concernant le point d'arrivée confirmé du premier véhicule, ledit au moins un itinéraire potentiel du premier véhicule étant déterminé en fonction dudit point d'arrivée confirmé.

Dans un mode de réalisation particulier, le système de gestion comprend uniquement un dispositif de gestion, le dispositif de gestion étant un serveur distant ou un terminal associé au premier véhicule ou à un élément de voie de circulation.

Dans un mode de réalisation, le procédé comprend en outre l'envoi d'un message d'instructions à au moins un élément dit d'exécution, ledit au moins un élément d'exécution étant déterminé en fonction dudit itinéraire confirmé.

Dans un mode de réalisation particulier, le procédé comprend en outre les étapes suivantes :
- réception d'un premier message de localisation du premier véhicule, comprenant un élément d'information de localisation du premier véhicule,
- détermination d'un itinéraire confirmé dans liste d'itinéraires potentiels, en fonction de l'élément d'information de localisation,
- envoi d'un message d'instructions à au moins un élément dit d'exécution, ledit au moins un élément d'exécution étant déterminé en fonction dudit itinéraire confirmé.

Ainsi, le procédé selon l'invention permet de localiser avec précision le véhicule en état d'urgence. La circulation du véhicule en état d'urgence est de plus améliorée.

Dans un mode de réalisation particulier, le premier signalement comprend un élément d'information concernant le type d'urgence du premier véhicule, le procédé comprenant en outre une étape de détermination du niveau d'urgence en fonction dudit élément d'information concernant le type d'urgence,le message d'alerte comprenant un élément d'information concernant le niveau d'urgence du premier véhicule, et/ou le message d'instruction comprenant l'élément d'information concernant le niveau d'urgence du premier véhicule.

Dans un mode de réalisation particulier, l'étape de détermination d'une liste d'itinéraires potentiels comprend les sous-étapes suivantes :
- détermination d'une zone de départ du premier véhicule,
- détermination d'au moins un point de départ potentiel dans la zone de départ,
- pour chaque point de départ potentiel, détermination d'au moins un itinéraire potentiel, à partir dudit point de départ potentiel.

Dans un mode de réalisation particulier, le premier signalement comprend un élément d'information concernant un point de départ confirmé, l'étape de détermination d'une liste d'itinéraires potentiels comprenant les sous-étapes suivantes :
- détermination d'au moins un point d'arrivée potentiel en fonction dudit élément d'information concernant le point de départ confirmé et de l'élément d'information concernant le type d'urgence du premier véhicule,
- pour chaque point d'arrivée potentiel, détermination d'au moins un itinéraire potentiel à partir du point de départ confirmé et dudit point d'arrivée potentiel.

Dans un mode de réalisation particulier, le procédé comprend en outre les étapes suivantes :
- pour chaque itinéraire potentiel de la liste d'itinéraires potentiels, détermination de la durée de trajet potentielle associée audit itinéraire potentiel,
- détermination d'un point d'arrivée le plus probable en fonction de chaque durée de trajet potentielle et/ou d'une information concernant la capacité de gestion de l'urgence au niveau du point d'arrivée de chaque itinéraire potentiel,
- transmission au premier véhicule d'au moins un itinéraire potentiel associé au point d'arrivée le plus probable.

Dans un mode de réalisation particulier, la durée de trajet potentielle est corrigée en appliquant un taux correctif calculé en fonction d'un élément d'information de trafic en temps réel et/ou en fonction d'un élément d'information concernant un niveau de véhicules aptes à prendre en compte une instruction du message d'instruction. Dans un mode de réalisation particulier, ledit au moins un élément de détection est déterminé en fonction d'au moins un élément contextuel concernant ledit au moins un élément de détection, parmi la liste d'éléments contextuels suivante :
- une position de géolocalisation,
- un itinéraire prévisionnel,
- une vitesse,
- une information liée au trafic aux alentours de la position de géolocalisation de l'élément de détection, ledit élément de détection étant susceptible de se situer au niveau d'au moins une portion d'itinéraire dudit au moins un itinéraire potentiel, ladite au moins une portion d'itinéraire étant susceptible d'être suivie par le premier véhicule pendant une période de temps prédéterminée, ledit au moins un élément de détection étant ajouté à une liste d'éléments de détection associée à ladite moins une portion d'itinéraire dudit au moins un itinéraire potentiel, ladite période de temps prédéterminée étant inférieure à cinq minutes.

Dans un mode de réalisation particulier, le procédé comprend en outre les étapes suivantes :
- détection de la mise en œuvre d'au moins une instruction de manœuvre du message d'instructions par ledit au moins un élément d'exécution,
- déduction d'une probabilité de présence du premier véhicule en fonction de la détection de la mise en œuvre de ladite au moins une instruction de manœuvre du message d'instructions,
- envoi d'un deuxième message de localisation du premier véhicule.

Dans un mode de réalisation particulier, ledit au moins un élément d'exécution est déterminé parmi ledit au moins un élément de détection de ladite au moins une liste d'éléments de détection.

L'invention concerne de plus un dispositif de gestion d'un état d'urgence d'un premier véhicule selon la revendication 11.

Dans un mode de réalisation particulier, le dispositif de gestion est un serveur distant ou un terminal associé au premier véhicule ou à un élément de voie de circulation.

Dans un mode particulier de réalisation, les différentes étapes du procédé de gestion selon l'invention sont déterminées par des instructions de programmes d'ordinateurs. En conséquence, l'invention vise aussi un programme d'ordinateur, sur un support d'informations, ce programme comportant des instructions adaptées à la mise en œuvre des étapes d'un procédé de gestion selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- La figure 1 représente, de manière schématique, un système de gestion apte à mettre en œuvre un procédé de gestion selon un exemple de mode de réalisation de l'invention ;
- La figure 2 représente, de manière schématique, un serveur distant du système de gestion de la figure 1 ;
- La figure 3 représente, sous forme d'organigramme, les principales étapes d'un procédé de gestion selon un exemple de mode de réalisation de l'invention.

### Description des modes de réalisation

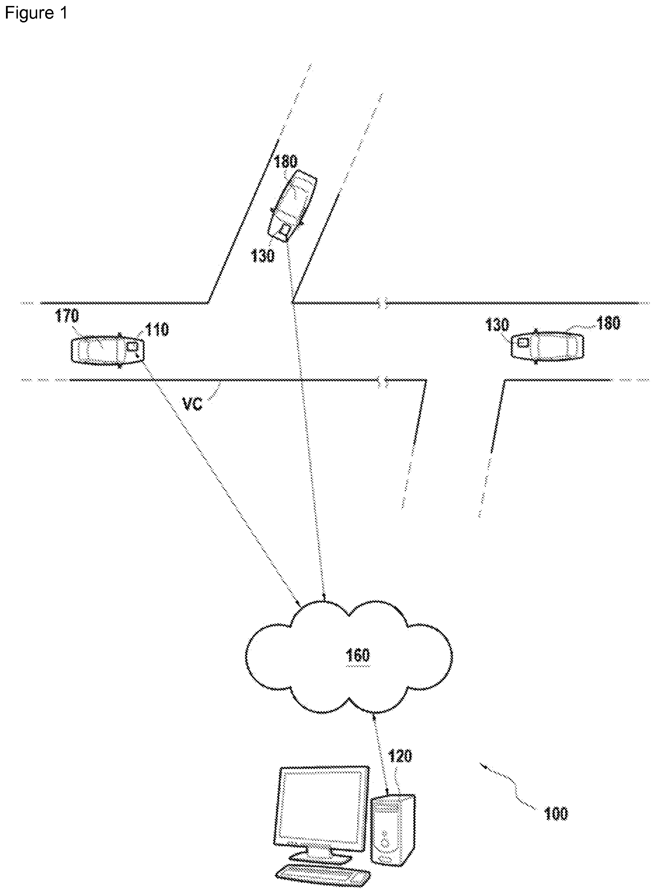

La figure 1 représente, de manière schématique, un système 100 de gestion apte à mettre en œuvre un procédé de gestion d'un état d'urgence d'un premier véhicule, selon un exemple de mode de réalisation de l'invention.

Le système comprend une pluralité de modules dont un module de réception, un module de détermination et un module d'envoi (non représentés).

Le système 100 comprend un premier terminal 110, un serveur distant 120, et au moins un autre terminal dit deuxième terminal 130. Le système 100 peut en outre comprendre un serveur de service de gestion d'urgence (non représenté).

De plus, le système 100 peut comporter un ou plusieurs autres serveurs distants, par exemple dédiés au stockage de longue durée (non représentés).

Le premier terminal 110, le serveur distant 120, chaque deuxième terminal 130 et/ou le serveur de service de gestion d'urgence peuvent être connectés à un réseau de télécommunication 160 afin de communiquer entre eux. Aucune limitation n'est attachée à la nature du réseau de télécommunications. Il peut s'agir par exemple d'un réseau Wifi, ou d'un réseau de téléphonie mobile (de type 3G, 4G, 5G, etc.).

De plus, les protocoles de télécommunications utilisés peuvent être variés. Les protocoles utilisés sont par exemple les protocoles BTP/GeoNet/UDP/IP (pour « Basic Transport Protocol/GeoNet/User Datagram Protocol/Internet Protocol », en terminologie anglo-saxonne), en cellulaire 4G ou 5G, ou MQTT/TCP/IP (Message Queuing Telemetry Transport/Transmission Control Protocol/Internet Protocol), aussi en cellulaire.

Le premier terminal 110 peut être un terminal mobile tel qu'un téléphone portable, par exemple de type « smartphone », une tablette numérique, ou un ordinateur personnel.

Le premier terminal 110 est associé au premier véhicule 170. Le premier véhicule 170 est par exemple situé au niveau d'une voie de circulation VC. Le premier véhicule 170 peut par exemple circuler sur la voie de circulation VC.

Le premier terminal 110 peut ainsi être positionné au niveau du premier véhicule 170, typiquement à l'intérieur du premier véhicule 170, ou incorporé dans le premier véhicule 170, c'est-à-dire faisant partie des systèmes embarqués du véhicule 170.

Chaque deuxième terminal 130 peut être un terminal mobile tel qu'un téléphone portable, par exemple de type « smartphone », une tablette numérique, ou un ordinateur personnel.

En outre, chaque deuxième terminal 130 est associé à un élément 180 de voie de circulation, cet élément 180 étant typiquement un élément mobile tel qu'un véhicule ou un être vivant, ou un élément fixe, tel qu'un panneau d'affichage, un radar ou une caméra.

Chaque élément 180 de voie de circulation est par exemple situé au niveau d'une voie de circulation VC, pouvant être différente de la voie de circulation VC du premier véhicule 170. Lorsque l'élément 180 est mobile, il circule par exemple sur la voie de circulation VC ou à côté (typiquement lorsque le premier élément mobile est un être vivant). Lorsque l'élément 180 est fixe, il peut être positionné au niveau de la voie de circulation VC, typiquement à côté ou au-dessus.

Chaque deuxième terminal 130 peut ainsi être positionné au niveau d'un véhicule 180, typiquement à l'intérieur du véhicule 180, ou incorporé dans le véhicule 180, c'est-à-dire faisant partie des systèmes embarqués du véhicule 180.

Chaque véhicule 170, 180 peut prendre la forme d'un véhicule motorisé tel qu'une voiture automobile, une camionnette, un camion, un autobus ou un deux-roues, d'une bicyclette, d'un train, d'un tramway ou encore d'un bateau ou d'un avion. Aussi, la ou les voies de circulation VC mentionnées dans ce document peuvent être terrestres, maritimes ou aériennes. De plus, chaque véhicule 170, 180 peut être un véhicule autonome.

De plus, le premier véhicule 170 peut être tout type de véhicule. Aussi le premier véhicule 170 peut être un véhicule commun ou un véhicule d'intérêt général prioritaire tel qu'une ambulance, un camion de pompier ou une voiture de police.

Le serveur de service de gestion d'urgence est un serveur lié à un service de gestion d'urgence, ce service proposant typiquement aux utilisateurs de ce service de signaler un état d'urgence d'un véhicule.

Le serveur distant 120 est un serveur apte à stocker une pluralité d'éléments d'information décrits ci-après, concernant le premier véhicule 170 et chaque élément 180 de voie de circulation. Le serveur distant 120 est ainsi apte à utiliser ces éléments d'information afin de gérer à distance l'état d'urgence d'un véhicule tel que le premier véhicule 170.

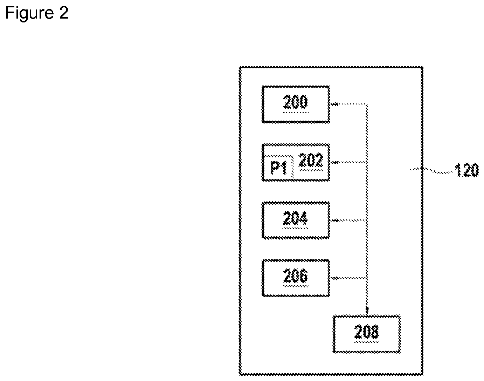

Comme le montre la figure 2, le serveur distant 120 présente l'architecture conventionnelle d'un ordinateur. Le serveur distant 120 comporte notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

La mémoire morte 202 du serveur distant 120 constitue un support d'enregistrement conforme à un exemple de mode de réalisation de l'invention, lisible par le processeur 200 et sur lequel est enregistré un programme d'ordinateur P1 conforme à un exemple de mode de réalisation de l'invention. En variante, le programme d'ordinateur P1 est stocké dans la mémoire non volatile réinscriptible 204.

Le programme d'ordinateur P1 peut permettre au serveur distant 120 de mettre en œuvre au moins une partie du procédé de gestion conforme à un exemple de mode de réalisation de l'invention.

Ce programme d'ordinateur P1 peut ainsi définir des modules fonctionnels et logiciels du serveur distant 120, configurés pour mettre en œuvre les étapes d'un procédé de gestion conforme à un exemple de mode de réalisation de l'invention, ou au moins une partie de ces étapes. Ces modules fonctionnels s'appuient sur ou commandent les éléments matériels 200, 202, 204, 206 et 208 de la plateforme 110 cités précédemment. Ils peuvent comprendre notamment ici le module de réception, le module de détermination et le module d'envoi du système 100.

Le premier terminal 110, chaque deuxième terminal 130, et/ou le serveur de service de gestion d'urgence peuvent aussi présenter l'architecture conventionnelle d'un ordinateur, et peuvent chacun alors comporter notamment un processeur, une mémoire morte (de type « ROM »), une mémoire non volatile réinscriptible (de type « EEPROM » ou « Flash NAND » par exemple), une mémoire volatile réinscriptible (de type « RAM »), et une interface de communication.

Chaque mémoire morte peut constituer un support d'enregistrement conforme à un exemple de mode de réalisation de l'invention, lisible par le processeur associé et sur lequel est enregistré un programme d'ordinateur conforme à un exemple de mode de réalisation de l'invention. En variante, le programme d'ordinateur est stocké dans la mémoire non volatile réinscriptible associée. Le programme d'ordinateur peut permettre la mise en œuvre d'au moins une partie du procédé de gestion conforme à un exemple de mode de réalisation de l'invention.

Chaque programme d'ordinateur peut ainsi définir des modules fonctionnels et logiciels configurés pour mettre en œuvre les étapes d'un procédé de gestion conforme à un exemple de mode de réalisation de l'invention, ou au moins une partie de ces étapes. Ces modules fonctionnels s'appuient sur ou commandent les éléments matériels cités précédemment et peuvent comprendre notamment le module de réception, le module de détermination et le module d'envoi du système 100.

En outre, chaque deuxième terminal 130 peut comprendre une caméra embarquée, un radar, un microphone, un scanner laser et/ou un moyen de guidage GPS ou Galileo.

En variante le chaque élément 180 de voie de circulation peut comprendre une caméra embarquée, un radar, un microphone et/ou un moyen de guidage GPS ou Galileo, auxquels le deuxième terminal 130 peut accéder.

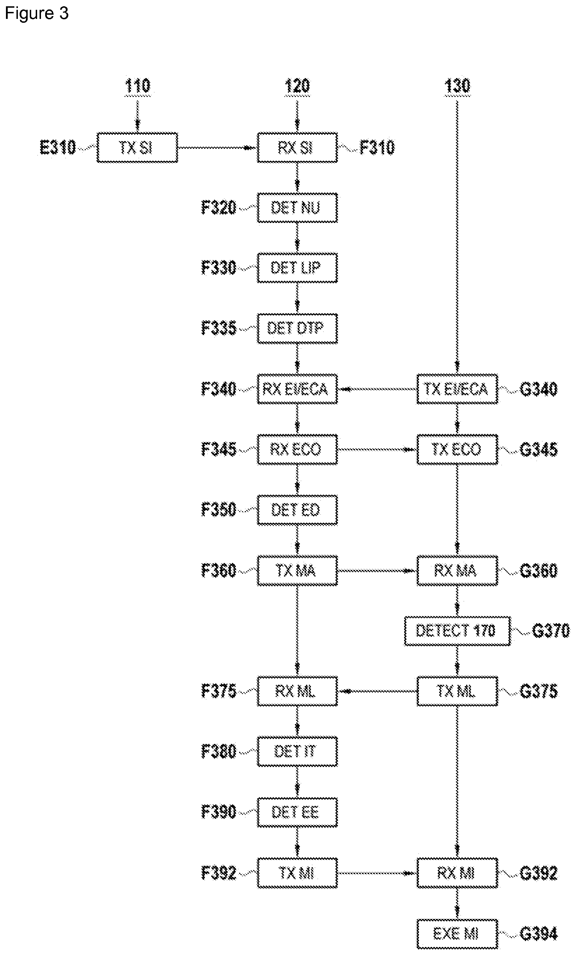

La figure 3 représente un procédé 300 de gestion d'un état d'urgence d'un premier véhicule, selon un exemple de mode de réalisation de l'invention.

Le procédé peut être mis en œuvre par le système 100 de gestion décrit en référence aux figures 1 et 2. Le premier véhicule 170 en état d'urgence est alors le premier véhicule 170 décrit en référence à la figure 1.

Dans une étape E310, un premier signalement SI de l'état d'urgence du premier véhicule 170 est transmis, par exemple au serveur distant 120.

L'urgence est typiquement une urgence sanitaire ou vitale, concernant un ou plusieurs êtres vivants tels que des êtres humains. L'urgence concerne ainsi par exemple un blessé ou une femme sur le point d'accoucher.

Le premier véhicule 170 peut transporter un ou plusieurs êtres vivants en situation d'urgence vers un lieu de prise en charge de l'urgence tel qu'un centre de soins, ou se diriger vers un lieu où un ou plusieurs êtres vivants sont en situation d'urgence, tel qu'un lieu au niveau duquel s'est produit un accident.

Le premier signalement SI peut comprendre au moins un élément d'identification du premier véhicule 170, et/ou au moins un élément de caractérisation du premier véhicule 170.

L'élément d'identification est typiquement le numéro de plaque d'immatriculation du premier véhicule 170 ou le numéro MSISDN (acronyme de « Mobile Station Integrated Services Digital Network » en terminologie anglo-saxonne) du premier terminal 110 associé au premier véhicule 170. En outre, chaque élément de caractérisation peut indiquer :
- la catégorie à laquelle appartient le premier véhicule 170, c'est-à-dire indiquer si le premier véhicule 170 est une voiture automobile, un camion, un autobus, un deux-roues, une bicyclette, un train, un tramway, un bateau, un avion etc.,
- une sous-catégorie de la catégorie à laquelle le premier véhicule 170 appartient. Par exemple, cette information peut porter sur le type de véhicule, la marque du véhicule, le modèle du véhicule, la couleur du véhicule, etc.,
- les capacités de communication du premier véhicule 170,
- le degré d'autonomie du premier véhicule 170.

En outre, le premier signalement SI peut comprendre un élément d'information concernant le type d'urgence du premier véhicule 170. Le type d'urgence peut être par exemple un accident de la route, un accouchement imminent, une personne inconsciente, une fracture, une brûlure etc.

De plus, le premier signalement SI peut comprendre un élément d'information concernant le point de départ dit confirmé du premier véhicule 170, un élément d'information concernant le point d'arrivée dit confirmé du premier véhicule 170, et/ou un élément d'information concernant un ou plusieurs itinéraires potentiels du premier véhicule 170.

Le terme « confirmé » est employé ici pour désigner un point de départ, un point d'arrivée ou un itinéraire connu du premier véhicule 170. Le terme « potentiel » est employé pour désigner un point de départ, un point d'arrivée ou un itinéraire inconnu ou incertain du premier véhicule 170, mais pouvant respectivement être le point de départ, le point d'arrivée ou l'itinéraire du premier véhicule 170.Le premier signalement SI de l'état d'urgence est typiquement envoyé par le premier terminal 110 associé au premier véhicule 170, par exemple sous forme de message et via le réseau de télécommunications 160.

Lorsque le premier véhicule 170 est un véhicule d'intérêt général prioritaire, l'envoi du signalement par le premier terminal 110 peut être déclenché par l'actionnement d'un dispositif de signalement du premier véhicule 170, tel qu'une sirène ou un gyrophare.

En variante ou en complément, l'envoi du premier signalement SI par le premier terminal 110 peut être déclenché par une validation d'un utilisateur au niveau du premier terminal 110. En variante, l'envoi du premier signalement SI peut être déclenché par une validation d'un utilisateur au niveau d'un autre terminal, l'utilisateur étant par exemple un témoin extérieur au premier véhicule 170, tel qu'un membre de la famille d'une femme enceinte souhaitant indiquer que le premier véhicule 170 part d'un point de départ confirmé avec cette femme enceinte à bord.

Chaque élément d'identification ou de caractérisation du premier signalement SI peut avoir été pré-indiqué, par exemple lors d'une inscription de l'utilisateur au service de gestion d'urgence, ou indiqué par l'utilisateur juste avant le déclenchement de l'envoi, par exemple via une application informatique ou un site Internet.

En outre, chaque éventuel élément d'information concernant le type d'urgence, le point de départ confirmé, le point d'arrivée confirmé, et/ou le ou les itinéraires potentiels du premier véhicule 170 peut être indiqué par l'utilisateur juste avant le déclenchement de l'envoi, ou obtenu depuis un moyen de guidage GPS ou Galileo. Afin d'aider l'utilisateur à indiquer l'élément d'information concernant le type d'urgence, une liste comprenant des éléments d'information préremplis peut être présentée à l'utilisateur.

Le premier signalement SI de l'état d'urgence peut aussi prendre la forme d'un appel téléphonique à un service dédié, afin de permettre le premier signalement SI dans une majorité de cas, même par un témoin extérieur au premier véhicule 170, au moyen d'un autre terminal.

Le premier signalement SI est typiquement reçu par le serveur distant 120 (étape F310).

Dans une étape F320, le serveur distant 120 peut déterminer le niveau d'urgence NU du premier véhicule 170, en fonction de l'élément d'information concernant le type d'urgence. La détermination du niveau d'urgence NU permet de déterminer le niveau de priorité du premier véhicule 170 pour le trajet devant être réalisé en état d'urgence.

Le niveau d'urgence augmente typiquement en fonction de la gravité de l'urgence et du nombre d'êtres vivants concernés.

Le serveur distant 120 peut éventuellement envoyer un message au premier terminal 170 afin de demander des précisions sur le type d'urgence et afin de mieux déterminer le niveau d'urgence.

En variante, lorsque le signalement SI est reçu par le serveur du service de gestion d'urgence, ce serveur détermine alors le niveau d'urgence du premier véhicule 170 en fonction de l'élément d'information concernant le type d'urgence.

Le serveur du service de gestion d'urgence envoie ensuite un deuxième signalement SI au serveur distant 120, comprenant le niveau d'urgence.

Le deuxième signalement peut aussi comprendre l'élément d'information concernant le point d'arrivée confirmé. Ainsi, par exemple, lorsque le service de gestion d'urgence est un service de pompiers déclenchant une intervention, la localisation de l'intervention peut être obtenue à partir de l'élément d'information concernant le point d'arrivée confirmé.

Dans une autre variante, le premier terminal 110 détermine le niveau d'urgence du premier véhicule 170 en fonction de l'élément d'information concernant le type d'urgence, et peut alors envoyer le niveau d'urgence au serveur distant 120 dans le message de signalement de l'étape E310.

Dans une étape F330, une liste d'itinéraires potentiels LIP comprenant au moins un itinéraire potentiel du premier véhicule 170 est déterminée, typiquement par le serveur distant 120.

Lorsque le premier signalement SI reçu à l'étape F310 comprend l'élément d'information concernant le ou les itinéraires potentiels du premier véhicule 170, chaque itinéraire potentiel indiqué par cet élément d'information est ajouté à la liste d'itinéraires potentiels LIP.

Lorsque le premier signalement SI reçu à l'étape F310 comprend l'élément d'information concernant le point de départ confirmé du premier véhicule 170 et l'élément d'information concernant le point d'arrivée confirmé du premier véhicule 170, le serveur distant 120 détermine un ou plusieurs itinéraires potentiels en fonction de ces éléments d'information concernant les points de départ et d'arrivée confirmés. Par exemple, un seul itinéraire optimum peut être déterminé.

Chaque itinéraire est typiquement déterminé à partir de logiciels de navigation et de cartographie divers.

Lorsque le premier signalement SI reçu à l'étape F310 ne comprend pas d'élément d'information concernant le point de départ confirmé du premier véhicule 170, un ou plusieurs points de départ potentiels du premier véhicule 170 peuvent alors être déterminés par le serveur distant 120.

De même, lorsque le signalement reçu à l'étape F310 ne comprend pas d'élément d'information concernant le point d'arrivée confirmé du premier véhicule 170, un ou plusieurs points d'arrivée potentiels du premier véhicule 170 peuvent alors être déterminés par le serveur distant 120.

Un ou plusieurs itinéraires potentiels peuvent être déterminés par le serveur distant 120 à partir de chaque couple de point de départ potentiel et de point d'arrivée potentiel, de chaque couple de point de départ confirmé et de point d'arrivée potentiel, et/ou chaque couple de point de départ potentiel et de point d'arrivée confirmé.

L'étape F330 peut comprendre une sous étape de détermination d'une zone de départ du premier véhicule 170.

Par exemple, lorsque le premier signalement SI de l'état d'urgence prend la forme d'un message, le terminal ayant envoyé le message peut être localisé à partir de cet envoi afin de déterminer la zone de départ. De plus, lorsque le signalement de l'état d'urgence prend la forme d'un appel téléphonique, l'appel téléphonique peut être localisé afin de déterminer la zone de départ.

Cette sous étape de détermination d'une zone de départ est suivie d'une sous étape de détermination d'un ou plusieurs points de départ potentiels dans la zone de départ, puis d'une sous étape de détermination, pour chaque point de départ potentiel déterminé, d'un ou plusieurs itinéraires potentiels à partir dudit point de départ potentiel.

Lorsque le premier signalement SI comprend l'élément d'information concernant un point de départ confirmé et l'élément d'information concernant le type d'urgence, l'étape F330 peut comprendre une sous étape de détermination d'un ou plusieurs points d'arrivée potentiels en fonction de l'élément d'information concernant le point de départ confirmé et de l'élément d'information concernant le type d'urgence du premier véhicule 170.

Le serveur distant 120 peut alors déterminer un ou plusieurs points d'arrivée potentiels correspondants aux lieux de prise en charge de l'urgence les plus proches du point de départ confirmé.

En effet, dans certaines situations d'urgence telles qu'un départ vers une maternité, l'utilisateur du premier terminal 110 peut être incapable d'indiquer les coordonnées de la maternité. De plus, après un accident de la route, l'utilisateur du premier terminal 110 peut ne pas connaître la localisation de l'hôpital le plus proche.

L'étape F330 comprend alors ensuite, pour chaque point d'arrivé potentiel déterminé, une détermination d'un ou plusieurs itinéraires potentiels à partir du point de départ confirmé et dudit point d'arrivée potentiel déterminé.

Pour chaque itinéraire potentiel de la liste d'itinéraires potentiels LIP, une durée de trajet potentielle DTP associée audit itinéraire potentiel peut être déterminée par le serveur distant 120, dans une étape F335.

Afin de corriger chaque durée de trajet, le serveur distant 120 peut appliquer un taux correctif calculé en fonction d'un élément d'information de trafic en temps réel, et éventuellement d'un élément d'information concernant un niveau de véhicules aptes à prendre en compte une instruction telle qu'envoyée à l'étape F392.

En outre, le taux correctif peut être calculé en fonction du niveau d'urgence déterminé à l'étape F320. En effet, plus le niveau d'urgence est élevé, plus la vitesse de déplacement du premier véhicule 170 peut être élevée (ce gain de vitesse peut cependant être peu élevé lorsque le trafic est fluide).

Ensuite, le serveur distant 120 peut déterminer un point d'arrivée le plus probable en fonction de chaque durée de trajet potentielle et/ou d'une information concernant la capacité de gestion de l'urgence au niveau du point d'arrivée de chaque itinéraire potentiel.

L'information concernant la capacité de gestion de l'urgence au niveau du point d'arrivée peut par exemple indiquer la présence de médecin pouvant traiter le type d'urgence et/ou la saturation au niveau du lieu de prise en charge de l'urgence associé au point d'arrivée.

Le serveur distant 120 peut ensuite envoyer, au premier terminal 110, l'itinéraire potentiel associé au point d'arrivé le plus probable (aussi appelé itinéraire optimum). Le premier véhicule 170 peut alors suivre cet itinéraire optimum, en adaptant sa conduite au niveau d'urgence déterminé à l'étape F320.

En variante, le premier terminal 110 peut mettre en œuvre l'étape F330 et éventuellement l'étape F335, puis envoyer au serveur distant 120 la liste d'itinéraires potentiels LIP et éventuellement la durée de trajet potentielle DTP associée à chaque itinéraire potentiel de la liste d'itinéraires potentiels LIP.

Chaque itinéraire potentiel peut être divisé en plusieurs portions d'itinéraire, chaque portion d'itinéraire étant associée à une période de trajet, de sorte à obtenir, pour la fin de chaque portion, un horaire de passage potentiel du premier véhicule 170.

Dans une étape G340 dite préliminaire, un ou plusieurs deuxième terminaux 130 associés à des éléments 180 de voie de circulation peuvent envoyer un ou plusieurs éléments d'identification EI et/ou un ou plusieurs éléments de caractérisation ECA concernant l'élément 180 associé, typiquement au serveur distant 120 via le réseau de télécommunications 160.

Chaque élément d'identification EI envoyé par un élément de voie de circulation est typiquement le numéro MSISDN du deuxième terminal 130 associé à l'élément 180 de voie de circulation. En variante, l'élément d'identification EI peut être le numéro de plaque de l'élément de voie de circulation.

En outre, chaque élément de caractérisation ECA d'un élément 180 de voie de circulation peut indiquer :
- la catégorie à laquelle appartient l'élément 180 de voie de circulation, c'est-à-dire indiquer si élément 180 est fixe ou mobile, ou plus précisément si l'élément 180 est une voiture automobile, un camion, un autobus, un deux-roues, une bicyclette, un train, un tramway, un bateau, un avion, un être humain, un animal un panneau d'affichage, un radar, une caméra de surveillance, etc.,
- une sous-catégorie de la catégorie générale à laquelle l'élément 180 de voie de circulation appartient. Par exemple, si l'élément 180 est un véhicule, cette information peut porter sur le type de véhicule, la marque du véhicule, le modèle du véhicule, la couleur du véhicule, etc.,
- une caractéristique de l'élément 180 de voie de circulation. Par exemple, si l'élément 180 est un véhicule, cela peut être le poids du véhicule, la vitesse maximale du véhicule, si le véhicule est d'intérêt général prioritaire, etc.,
- une capacité d'analyse de l'élément 180 de voie de circulation,
- le degré d'autonomie de l'élément 180 de voie de circulation.

La catégorie et la sous-catégorie peuvent être envoyées dans un message de type CAM (pour « Cooperative Awareness Message », en terminologie anglo-saxonne), défini dans la norme ETSI EN 302 637-2, ou un autre type de message.

Le degré d'autonomie désigne ici la capacité de l'élément 180 à suivre et/ou répondre à une instruction telle qu'une instruction envoyée à l'étape F392 décrit ci-après. Par exemple, un véhicule entièrement autonome peut automatiquement prendre en compte l'instruction et ainsi réaliser la manœuvre associée, un véhicule disposant d'une assistance à la conduite peut nécessiter un acquittement de la part du conducteur, et un véhicule ne disposant pas d'assistance à la conduite ne répond pas aux instructions.

Chaque élément d'identification EI ou de caractérisation ECA d'un élément 180 de voie de circulation est typiquement envoyé par le deuxième terminal 130 associé à l'élément 180 lors d'une inscription du deuxième terminal 130 associé à l'élément 180 au service de gestion d'urgence ou lors d'une immatriculation de l'élément 180 de voie de circulation.

En variante, chaque élément d'identification EI ou de caractérisation ECA peut être envoyé par le deuxième terminal 130 associé à l'élément 180 lors d'un appareillage du deuxième terminal 130 associé à l'élément 180 de voie de circulation, ou lors d'un début de trajet.

Le deuxième terminal 130 associé à l'élément 180 de voie de circulation peut alors conserver tout ou partie des données, et les envoyer au serveur distant 120 après avoir été authentifié auprès du serveur distant 120, ce qui permet de préserver l'anonymat des données lorsque le procédé n'est pas mis en œuvre. En variante, afin d'éviter un volume de transfert de données trop important, le deuxième terminal 130 associé à l'élément 180 de voie de circulation peut envoyer un lien vers un espace de stockage d'un autre serveur distant, typiquement après authentification du deuxième terminal 130 auprès du serveur distant 120 et éventuellement auprès de l'autre serveur distant.

Bien entendu, l'envoi d'un ou plusieurs éléments d'identification EI ou de caractérisation ECA peut être réitéré une ou plusieurs fois afin de mettre à jour ce ou ces éléments dans le serveur distant 120.

En effet, certains éléments de caractérisation tels que le poids de l'élément de voie de circulation peuvent varier dans le temps. Par exemple, le poids d'un camion varie en fonction du chargement de ce camion. Le déclenchement de l'envoi et donc de la mise à jour est manuel ou automatique au moyen d'un capteur.

Le serveur distant 120 reçoit le ou les éléments d'identification EI ou de caractérisation ECA dans une étape F340, puis les enregistre afin de la stocker, typiquement de manière sécurisée, après les avoir éventuellement certifiés.

En outre, chaque deuxième terminal 130 associé à un élément 180 de voie de circulation peut envoyer, par exemple de manière périodique, un ou plusieurs éléments contextuels ECO, typiquement au serveur distant 120 via le réseau de télécommunications 160 (étape G345).

Chaque élément contextuel ECO envoyé peut être :
- une position de géolocalisation de l'élément 180 de voie de circulation,
- un itinéraire prévisionnel de l'élément 180 de voie de circulation,
- la vitesse de l'élément 180 de voie de circulation,
- une information liée au trafic aux alentours de la position de géolocalisation de l'élément 180 de voie de circulation, etc.

Le ou les éléments contextuels ECO peuvent être envoyés dans un message de type CAM (pour « Cooperative Awareness Message », en terminologie anglo-saxonne), défini dans la norme ETSI EN 302 637-2, ou un autre type de message.

Le serveur distant 120 reçoit le ou les éléments contextuels ECO dans une étape F345, puis les enregistre afin de la stocker, typiquement de manière sécurisée, après les avoir éventuellement certifiés.

Dans une étape F350, pour chaque itinéraire de la liste d'itinéraires potentiel LIP, un ou plusieurs éléments susceptibles de confirmer que le premier véhicule 170 suit l'itinéraire potentiel sont déterminés par le serveur distant 120, parmi les éléments 180 de voie de circulation ayant envoyés un élément d'identification et/ou de caractérisation à l'étape G340. De tels éléments susceptibles de détecter le premier véhicule 170 et ainsi de confirmer que le premier véhicule 170 suit l'itinéraire potentiel sont appelés par la suite éléments de détection ED.

Plus précisément, un ou plusieurs éléments de détection ED peuvent être recherchés au niveau d'une ou plusieurs portions d'itinéraire de chaque itinéraire potentiel, typiquement les portions d'itinéraires susceptibles d'être suivies par le premier véhicule 170 pendant une période de temps prédéterminée comprenant une ou plusieurs périodes de trajet successives. Chacun de ces éléments de détection ED est alors susceptible de confirmer que le premier véhicule 170 suit la portion d'itinéraire associée.

La période de temps prédéterminée est typiquement déterminée en fonction d'éléments contextuels tels que le trafic sur chaque itinéraire potentiel, la vitesse du premier véhicule 170, etc. Elle peut en outre être déterminée sur la base d'historiques par portion de voie. Cette période de temps est typiquement de quelques minutes, en particulier lorsque l'élément 180 de voie de circulation circule en ville lors d'un pic de circulation, du fait des aléas fréquents pouvant survenir. La période de temps peut toutefois être plus longue lorsque l'élément 180 de voie de circulation circule dans un environnement impliquant une plus grande régularité de vitesse et de trajectoire, tel qu'une autoroute au niveau de laquelle le trafic est faible.

La période de temps est typiquement inférieure à cinq minutes, pour des raisons de fiabilité.

Un élément de détection ED associé à une portion d'itinéraire est typiquement déterminé en fonction d'un ou plusieurs éléments contextuels, envoyés à l'étape G345.

Plus précisément, lorsque l'itinéraire prévisionnel d'un élément 180 de voie de circulation est reçu par le serveur distant 120, le serveur distant 120 détermine, à partir de cet itinéraire prévisionnel, si cet élément 180 de voie de circulation est susceptible de se situer au niveau d'une portion d'itinéraire de l'itinéraire potentiel (c'est-à-dire sur ou à proximité immédiate, par exemple sur un voie de circulation croisant la portion d'itinéraire) pendant la période de trajet associée à cette portion d'itinéraire. Si cela est le cas, le serveur distant 120 détermine que cet élément 180 de voie de circulation est un élément de détection ED, ajoute l'élément de détection ED à une liste d'éléments de détection ED associée à cette portion d'itinéraire, par exemple en ajoutant à cette liste l'élément d'identification de l'élément de détection ED.

Lorsque la position de géolocalisation de l'élément 180 de voie de circulation est reçue par le serveur distant 120 mais pas l'itinéraire prévisionnel de l'élément 180 de voie de circulation, le serveur distant 120 peut calculer une ou plusieurs trajectoires prévisionnelles pendant la période de temps prédéterminée à partir de la position de géolocalisation. En outre, la vitesse et le sens de déplacement peuvent être déterminés par le serveur distant 120.

Le serveur distant 120 détermine ensuite, à partir de la ou les trajectoires prévisionnelles, et éventuellement à partir de la vitesse et du sens de déplacement, si cet élément de voie de circulation est susceptible de se trouver au niveau d'une portion d'itinéraire de l'itinéraire potentiel (c'est-à-dire sur ou à proximité immédiate) pendant la période de trajet associée à cette portion d'itinéraire. Si cela est le cas, le serveur distant 120 détermine que cet élément 180 de voie de circulation est un élément de détection ED, ajoute l'élément de détection ED à la liste d'éléments de détection ED associée à cette portion d'itinéraire, par exemple en ajoutant à cette liste l'élément d'identification de l'élément de détection ED.

Lorsqu'un élément de détection ED est déterminé par le serveur distant 120 pour une portion d'itinéraire associée à un itinéraire donné, l'élément de détection ED peut être ajouté à une liste d'éléments de détection ED associée à ladite portion d'itinéraire et à la période de trajet associée.

Chaque liste d'éléments de détection ED peut comprendre un ou plusieurs éléments de détection ED identiques à ceux d'une autre liste d'élément de détection ED (notamment lorsque ces éléments de détection ED suivent la même trajectoire que le premier véhicule 170 dans le même sens de circulation), mais peut aussi comprendre un ou plusieurs éléments de détection ED différents.

Par exemple, on considère que le premier véhicule 170 part d'un point A à un instant T0, vers un point d'arrivée PT et que, dans les premières minutes de son trajet, il est susceptible d'emprunter un premier itinéraire potentiel ou un deuxième itinéraire potentiel. Le serveur distant 120 détermine alors que pendant une première période de trajet de quelques minutes, le premier véhicule 170 devrait circuler sur une première portion d'itinéraire du premier itinéraire potentiel ou sur une deuxième portion d'itinéraire du deuxième itinéraire potentiel.

Le serveur distant 120 détermine alors quels éléments 180 de voie de circulation sont susceptibles de se trouver au niveau de la première portion d'itinéraire ou de la deuxième portion d'itinéraire, pendant la première période de trajet, ces éléments de voie de circulation devenant alors des éléments de détection ED.

Le serveur distant 120 peut déterminer de la même manière des éléments de détection ED pour les portions d'itinéraires suivantes des deux itinéraires potentiels.

Dans une étape F360, le serveur distant 120 envoie un message d'alerte MA à au moins un des éléments de détection ED déterminés à l'étape F350, par exemple chaque élément de détection ED déterminé à l'étape F350. Chaque message d'alerte MA envoyé à un élément de détection ED est typiquement reçu, dans une étape G360, par le deuxième terminal 130 associé audit élément de détection ED.

Un message d'alerte envoyé à un élément de détection ED donné indique typiquement que le premier véhicule 170 est en état d'urgence, et indique en outre que le premier véhicule 170 est susceptible de suivre une portion de voie au niveau de laquelle l'élément de détection ED est susceptible de se trouver pendant la période de trajet associée.

Aussi, le message d'alerte peut comprendre l'élément d'identification du premier véhicule 170, un ou plusieurs éléments de caractérisation du premier véhicule 170, l'élément d'information concernant le type d'urgence, un élément d'information concernant le niveau d'urgence du premier véhicule 170, l'élément d'information sur un ou plusieurs points de départ potentiels ou confirmé, un élément d'information sur la portion d'itinéraire considérée, un élément d'information sur la période de trajet associée considérée, etc.

Le message d'alerte peut en outre comprendre une instruction d'action telle qu'envoyée à l'étape F392 décrite ci-dessous.

L'étape F360 peut être réitérée une ou plusieurs fois.

Dans une étape G370, au moins un élément de détection ED détecte le premier véhicule 170. L'élément de détection ED envoie alors (étape G375) un message de localisation ML du premier véhicule 170, typiquement au serveur distant 120, qui le reçoit dans une étape F375.

Les étapes G370 et G375 sont typiquement mises en œuvre par le deuxième terminal 130 associé à l'élément de détection ED.

Le message de localisation ML comprend typiquement un élément d'information de localisation du premier véhicule 170, et éventuellement un ou plusieurs éléments d'identification EI, de caractérisation ECA et/ou contextuel ECO du premier véhicule 170.

Plus précisément, lors de l'étape G370 de détection, la position de géolocalisation et éventuellement un élément d'identification du premier véhicule 170 (typiquement numéro de plaque d'immatriculation) peuvent être obtenus.

De plus, au moins un élément de caractérisation (typiquement la catégorie, et une sous-catégorie) et/ou contextuels du premier véhicule 170 peuvent être obtenus lors de l'étape G370 de détection.

Par exemple, le deuxième terminal 130 associé à l'élément de détection ED analyse une ou plusieurs images obtenues par une caméra embarquée du deuxième terminal 130 afin de détecter et d'identifier le premier véhicule 170, ou analyse un signal électromagnétique envoyé au moyen du radar du deuxième terminal 130 ou de l'élément de détection ED, réfléchi par le premier véhicule 170, puis reçu par le radar.

Le deuxième terminal 130 compare ensuite les données obtenues aux éléments d'identification et/ou de caractérisation afin de déterminer la présence du premier véhicule 170.

En variante ou en complément, le deuxième terminal 130 associé à l'élément de détection ED détecte la mise en œuvre, par un élément d'exécution, d'au moins une instruction de manœuvre telle qu'envoyée à l'étape F392 décrite ci-après, et en déduit une probabilité de présence du premier véhicule 170.

La détection peut être facilitée par des signaux d'alerte émis par le premier véhicule 170 et détectés par l'élément de détection ED. Les signaux d'alerte sont par exemple émis par une sirène, un gyrophare ou des phares (appel de phare, feux de détresse allumés). Le deuxième terminal 130 ayant détecté ces signaux de détresse et étant informé qu'il est susceptible de détecter le premier véhicule 170 grâce au message d'alerte reçu à l'étape G360, il peut déduire une probabilité de présence du premier véhicule 170.

Le deuxième terminal 130 peut aussi déterminer la trajectoire et la vitesse du premier véhicule 170 lors de l'étape G370 de détection.

Le deuxième terminal 130 ayant détecté le premier véhicule 170 peut en outre mettre en œuvre une action selon une instruction telle qu'envoyée à l'étape F392 décrite ci-après.

L'étape G370 est typiquement réitérée, par le même élément de détection ED ou un élément de détection ED différent. L'étape G370 est ainsi typiquement mise en œuvre de manière périodique.

En variante, l'étape G370 n'est pas mise en œuvre car le premier véhicule 170 envoie lui-même le message de localisation ML à l'étape G375, typiquement de manière périodique. Le message de localisation ML comprend typiquement l'élément d'information de localisation et éventuellement un l'élément d'information concernant l'itinéraire suivi par premier véhicule 170. Cette variante est typiquement mise en œuvre uniquement lorsque le premier véhicule 170 est un véhicule d'intérêt général prioritaire, afin d'éviter certaines fraudes (par exemple lorsqu'un utilisateur d'un véhicule souhaite faciliter son déplacement alors que le véhicule n'est pas en état d'urgence).

Après avoir reçu le message de localisation ML (étape F375), le serveur distant 120 peut alors confirmer un itinéraire potentiel du premier véhicule 170, en fonction de l'élément d'information de localisation, l'itinéraire potentiel devenant alors un itinéraire confirmé IT (étape F380).

Plus précisément, le serveur distant 120 valide un des itinéraires potentiels de la liste d'itinéraires potentiels LIP déterminée à l'étape F330.

En outre, le serveur distant 120 peut supprimer le ou les autres itinéraires potentiels de la liste d'itinéraires potentiels LIP, de sorte à ne plus envoyer de message d'alerte MA pour ces itinéraires potentiels.

Dans une étape F390, un ou plusieurs éléments susceptibles de réaliser une action visant à laisser le passage au premier véhicule 170 sont déterminés, chaque élément étant par la suite appelé élément d'exécution EE. Plus précisément chaque élément d'exécution EE est recherché parmi le ou les éléments de détection ED de la ou des listes d'éléments de détection ED associées aux portions d'itinéraire de l'itinéraire confirmé.

Chaque élément d'exécution EE est déterminé en fonction d'un ou plusieurs éléments contextuels dudit élément d'exécution EE, tels que sa position de géolocalisation, son itinéraire prévisionnel, sa vitesse, le trafic aux alentours de sa position de géolocalisation, sa trajectoire prévisionnelle, etc., et en fonction des portions d'itinéraire de l'itinéraire confirmé.

Cette détermination peut typiquement être effectuée selon les étapes E420 et E442 de la demande de brevet français FR 3 076 046.

Ainsi, lorsqu'il est déterminé en fonction des éléments contextuels qu'un élément de détection ED de la ou des listes d'éléments de détection ED associées aux portions d'itinéraire de l'itinéraire confirmé est susceptible de suivre une des portions d'itinéraire de l'itinéraire confirmé en amont du premier véhicule 170 pendant la période de trajet associée, ou de se situer en amont à proximité de cette portion (par exemple au niveau d'une intersection), ledit élément de détection ED est alors déterminé comme étant un élément d'exécution EE.

L'étape F390 est typiquement mise en œuvre par le serveur distant 120 et/ou par le premier terminal 110.

Dans une étape F392 le serveur distant 120 ou le premier terminal 110 envoie un message d'instructions MI à chaque élément d'exécution EE déterminé à l'étape F390. En variante, le ou les messages d'instructions MI sont mis à disposition des éléments d'exécution EE associés (serveur de collecte) par le serveur distant 120.

Chaque message d'instructions MI envoyé à un élément d'exécution EE est typiquement reçu par le deuxième terminal 130 associé audit élément d'exécution EE (étape G392).

Chaque message d'instructions MI confirme que le premier véhicule 170 suit l'itinéraire confirmé. En outre, chaque message d'instructions MI peut comprendre un ou plusieurs éléments parmi : l'élément d'identification du premier véhicule 170, un ou plusieurs éléments de caractérisation et/ou contextuel du premier véhicule 170, l'élément d'information concernant le type d'urgence, l'élément d'information concernant le niveau d'urgence, l'élément d'information concernant le niveau de priorité du premier véhicule 170, un élément d'information sur la portion d'itinéraire sur ou à proximité de laquelle l'élément d'exécution EE peut se trouver en même temps que le premier véhicule 170, un élément d'information sur la période de trajet associée, etc.

En outre, chaque message d'instructions MI peut comprendre une instruction de laisser le passage au premier véhicule 170. L'instruction de laisser le passage peut comprendre une sous instruction d'action à réaliser afin de laisser le passage, associée à l'élément d'exécution EE destinataire du message d'instructions MI, l'action permettant de ne pas perturber l'avancée du premier véhicule 170, ou tout du moins à limiter au maximum une éventuelle perturbation de cette avancée.

L'action à réaliser est déterminée par le serveur distant 120 et/ou par le premier terminal 110.

Il est d'abord déterminé, à partir des éléments contextuels de l'élément d'exécution EE et du premier véhicule 170, si, pendant la période de trajet associée à la portion d'itinéraire sur ou à proximité de laquelle l'élément d'exécution EE peut se trouver en même temps que le premier véhicule 170, l'élément d'exécution EE est susceptible de circuler sur la même voie de circulation ou sur une voie de circulation différente. Si l'élément d'exécution EE est susceptible de circuler sur la même voie de circulation, il peut être déterminé si l'élément d'exécution EE est susceptible de circuler :
- sur la même sous voie de circulation que le premier véhicule 170 ou sur une autre sous voie de circulation,
- dans le même sens de circulation que le premier véhicule 170 ou dans le sens contraire,
- devant le premier véhicule 170 ou derrière le premier véhicule 170, et/ou
- à une vitesse inférieure à la vitesse du premier élément mobile 170, ou à une vitesse supérieure.

Si l'élément d'exécution EE est susceptible de circuler sur une voie de circulation différente, il peut être déterminé si l'élément d'exécution EE arrive sur une intersection entre sa voie de circulation et la voie de circulation du premier élément mobile 170.

Des éléments de caractérisation relatifs à l'élément d'exécution EE et/ou le premier véhicule 170 peuvent en outre être considérés, tels que la catégorie ou la sous-catégorie. De plus, le niveau d'urgence déterminé à l'étape F320 peut être considéré.

Les éléments d'information recueillis, appelés cadre de la manœuvre par la suite, permettent alors de déterminer une ou plusieurs actions correspondant à la manœuvre à réaliser. Cette détermination est typiquement réalisée conformément à l'étape E430 décrite dans la demande de brevet français FR 3 076 046 (le cadre de la manœuvre correspondant à la notion d'évènement dans cette demande).

Ainsi, une table de correspondance peut être consultée, la table de correspondance comprenant typiquement plusieurs cadres de manœuvre, chaque cadre de manœuvre étant associé avec une ou plusieurs actions pouvant être réalisées, prédéterminées de sorte à laisser le passage au premier véhicule 170.

Chaque action peut être une modification d'un paramètre de conduite, tel qu'un changement de trajectoire ou une modification de vitesse (accélération, ralentissement, arrêt).

Par exemple, un élément d'exécution EE donné peut se ranger afin de laisser passer le premier véhicule 170, ou accélérer jusqu'à une portion de voie plus lointaine lui permettant de laisser passer le premier véhicule 170, ou encore céder la priorité au premier véhicule 170 sur un rond-point ou à un feu rouge. Dans un autre exemple où l'élément d'exécution EE est susceptible de circuler sur la même sous voie que le premier véhicule 170 et devant le premier véhicule 170, l'action de l'élément d'exécution EE peut être de modifier sa trajectoire afin de typiquement s'écarter vers la droite (dans les pays où les véhicules roulent à droite). Dans un autre exemple où l'élément d'exécution EE est susceptible de circuler sur une autre sous voie que le premier véhicule 170, devant et dans la direction opposée du premier véhicule 170, l'action de l'élément d'exécution EE peut être de modifier sa trajectoire afin de typiquement s'écarter vers la gauche (dans les pays où les véhicules roulent à droite).

En outre, lorsque l'élément d'information concernant le niveau d'urgence indique que l'urgence est faible, l'action peut être une des actions susmentionnées (se ranger afin de laisser passer le premier véhicule 170, accélérer jusqu'à une portion de voie plus lointaine lui permettant de laisser passer le premier véhicule 170, céder la priorité au premier véhicule 170), tandis que lorsque l'élément d'information concernant le niveau d'urgence indique que l'urgence est forte (par exemple vitale), l'action peut être de bloquer la circulation au niveau d'un croisement, de sorte à laisser passer le premier véhicule 170 plus vite.

Chaque action peut être associée à un instant de départ de réalisation de l'action et/ou une durée prévisionnelle de l'action. En effet, cette action ne doit être réalisée ni trop tôt, car cela perturberait sans raison la circulation, ni trop tard, car cela entraverait l'avancée du premier véhicule 170.

L'instant de départ de réalisation de l'action et/ou la durée prévisionnelle sont obtenus en fonction d'éléments contextuels de l'élément de détection ED et/ou du premier véhicule 170. La vitesse, la trajectoire et le sens de déplacement peuvent par exemple être considérés. Le niveau d'urgence déterminé à l'étape F320 peut aussi être considéré, de sorte que plus le niveau d'urgence est élevé, plus l'instant de départ sera avancé.

L'instant de départ de réalisation de l'action est typiquement sous forme d'un horaire GMT, ou sous forme d'une durée restante. L'instant de départ de réalisation de l'action n'est ainsi pas forcément immédiat.

Le degré d'autonomie peut aussi être pris en compte lors de la détermination de chaque instruction.

Dans une étape G394, au moins un élément d'exécution EE ayant reçu un message d'instructions met en œuvre l'instruction de ce message d'instructions, à l'instant de départ indiqué.

Les étapes F390, F392 et éventuellement l'étape G394 peuvent être réitérées, typiquement lorsqu'un nouvel itinéraire est confirmé à l'étape F380 après une nouvelle détection du premier véhicule 170 par un élément de détection ED (étape G370), jusqu'à ce que le premier véhicule 170 arrive au point d'arrivée confirmé.

Le serveur distant 120 peut envoyer un message, via le réseau de télécommunications 160, au lieu de prise en charge de l'urgence correspondant au point d'arrivée confirmé à l'étape F320 et à l'étape E340, typiquement afin d'alerter le personnel du temps restant avant l'arrivée du premier véhicule 170.

Un historique de signalement d'état d'urgence du premier véhicule 170 peut être conservé par le serveur distant 120, associé à l'élément d'identification du premier véhicule 170, le point d'arrivée, et/ou une indication sur le fait sur le premier véhicule a atteint le point d'arrivée confirmé. Ainsi, il est possible de déterminer une éventuelle fraude.

Les étapes F310, F320, F330, F335, F340, F345, F350, F360, F375, F380, F390, F392 sont typiquement mises en œuvre par le serveur distant 120. En variante, une ou plusieurs de ces étapes peut être mises en œuvre par un deuxième terminal 130 associé à un élément 180 de voie de circulation et/ou le premier terminal 110 associé au premier véhicule 170.

## Revendications

1. Procédé de gestion d'un état d'urgence d'un premier véhicule (170) comprenant les étapes suivantes :
- réception (F310), par un système (100) de gestion, d'un premier signalement (SI) de l'état d'urgence du premier véhicule (170),
- envoi (F360), par le système (100) de gestion et à destination d'au moins un élément dit de détection (ED), d'un message d'alerte (MA), ledit au moins un élément dit de détection (ED) étant situé au niveau d'une voie de circulation, ledit au moins un élément de détection (ED) étant déterminé en fonction d'au moins un itinéraire potentiel du premier véhicule (170), le message d'alerte (MA) comprenant un élément d'identification du premier véhicule permettant la détection du premier véhicule par l'élément de détection ;
**caractérisé en ce qu'**il comprend en outre :
- réception (F375), par le système (100) de gestion, d'un message de localisation (ML) du premier véhicule (170) en provenance dudit au moins premier élément de détection (ED),
- confirmation (F380), par le système (100) de gestion, dudit au moins un itinéraire potentiel en tant qu'itinéraire confirmé, en fonction du message de localisation reçu.

2. Procédé de gestion conforme à la revendication 1, dans lequel le premier signalement comporte un élément d'information concernant le point d'arrivée confirmé du premier véhicule 170, ledit au moins un itinéraire potentiel du premier véhicule 170 étant déterminé en fonction dudit point d'arrivée confirmé.

3. Procédé de gestion selon la revendication 1, comprenant en outre l'envoi (F392), par le système (100) de gestion et à destination d'au moins un élément dit d'exécution (EE), d'un message d'instructions (MI), ledit au moins un élément d'exécution (EE) étant déterminé en fonction dudit itinéraire confirmé.

4. Procédé de gestion selon la revendication 3, dans lequel le premier signalement (SI) comprend un élément d'information (EI) concernant le type d'urgence du premier véhicule (170),
le procédé comprenant en outre une étape (F320) de détermination, par le système (100) de gestion, du niveau d'urgence en fonction dudit élément d'information concernant le type d'urgence,
le message d'alerte (MA) comprenant un élément d'information concernant le niveau d'urgence du premier véhicule (170), et/ou
le message d'instructions (MI) comprenant l'élément d'information concernant le niveau d'urgence du premier véhicule (170).

5. Procédé de gestion selon l'une quelconque des revendications 1 à 4, dans lequel la détermination (F330) d'au moins un itinéraire potentiel comprend les sous-étapes suivantes, mises en œuvre par le système (100) de gestion :
- détermination d'une zone de départ du premier véhicule (170),
- détermination d'au moins un point de départ potentiel dans la zone de départ,
- pour chaque point de départ potentiel, détermination d'au moins un itinéraire potentiel, à partir dudit point de départ potentiel.

6. Procédé de gestion selon la revendication 4, dans lequel le premier signalement (SI) comprend un élément d'information concernant un point de départ confirmé,
l'étape de détermination (F330) d'au moins un itinéraire potentiel comprenant les sous-étapes suivantes, mises en œuvre par le système (100) de gestion :
- détermination d'au moins un point d'arrivée potentiel en fonction dudit élément d'information concernant le point de départ confirmé et de l'élément d'information concernant le type d'urgence du premier véhicule (170),
- pour chaque point d'arrivée potentiel, détermination d'au moins un itinéraire potentiel à partir du point de départ confirmé et dudit point d'arrivée potentiel.

7. Procédé de gestion selon la revendication 6, comprenant en outre les étapes suivantes :
- détermination (F335), par le système (100) de gestion, de la durée de trajet potentielle (DTP) associée audit au moins un itinéraire potentiel,
- détermination, par le système (100) de gestion, d'un point d'arrivée le plus probable en fonction de chaque durée de trajet potentielle (DTP) et/ou d'une information concernant la capacité de gestion de l'urgence au niveau du point d'arrivée dudit au moins un itinéraire potentiel,
- transmission, par le système (100) de gestion et à destination dupremier véhicule (170), d'au moins un itinéraire potentiel associé au point d'arrivée le plus probable.

8. Procédé de gestion selon l'une quelconque des revendications 1 à 7, dans lequel ledit au moins un élément de détection (ED) est déterminé en fonction d'au moins un élément contextuel concernant ledit au moins un élément de détection, parmi la liste d'éléments contextuels suivante :
- une position de géolocalisation,
- un itinéraire prévisionnel,
- une vitesse,
- une information liée au trafic aux alentours de la position de géolocalisation de l'élément de détection (ED),
ledit élément de détection (ED) étant susceptible de se situer au niveau d'au moins une portion d'itinéraire dudit au moins un itinéraire potentiel, ladite au moins une portion d'itinéraire étant susceptible d'être suivie par le premier véhicule (170) pendant une période de temps prédéterminée,
ledit au moins un élément de détection (ED) étant ajouté à une liste d'éléments de détection (ED) associée à ladite moins une portion d'itinéraire dudit au moins un itinéraire potentiel,
ladite période de temps prédéterminée étant inférieure à cinq minutes.

9. Procédé de gestion selon l'une quelconque des revendications 1 à 8, comprenant en outre les étapes suivantes :
- détection, par un terminal associé audit élément de détection (ED), de la mise en œuvre d'au moins une instruction de manœuvre du message d'instructions (MI) par ledit au moins un élément d'exécution (EE),
- déduction, par ledit terminal, d'une probabilité de présence du premier véhicule (170) en fonction de la détection de la mise en œuvre de ladite au moins une instruction de manœuvre du message d'instructions (MI),
- envoi, par ledit terminal et à destination du système (100) de gestion, d'un deuxième message de localisation du premier véhicule (170).

10. Procédé de gestion selon la revendication 8, dans lequel ledit au moins un élément d'exécution (EE) est déterminé parmi ledit au moins un élément de détection (ED) de ladite au moins une liste d'éléments de détection (ED).

11. Dispositif de gestion (120, 130) d'un état d'urgence d'un premier véhicule (170) comprenant:
- un module de réception apte à recevoir un premier signalement (SI) de l'état d'urgence du premier véhicule (170),
- un module d'envoi apte à envoyer un message d'alerte (MA) à au moins un élément dit de détection (ED), situé au niveau d'une voie de circulation, ledit au moins un élément de détection (ED) étant déterminé en fonction d'au moins un itinéraire potentiel du premier véhicule (170), le message d'alerte (MA) comprenant un élément d'identification du premier véhicule permettant la détection du premier véhicule par l'élément de détection,
**caractérisé en ce qu'**il comprend en outre:
- un module de réception apte à recevoir un message de localisation (ML) du premier véhicule (170) en provenance dudit au moins premier élément de détection (ED),
- un module de confirmation apte à confirmer ledit au moins un itinéraire potentiel en tant qu'itinéraire confirmé, en fonction du message de localisation reçu.

12. Programme d'ordinateur (P1) comportant des instructions pour l'exécution des étapes du procédé de gestion selon l'une quelconque des revendications 1 à 10 lorsque ledit programme est exécuté par un ordinateur.

13. Support d'enregistrement lisible par un ordinateur sur lequel est enregistré un programme d'ordinateur (P1) comprenant des instructions pour l'exécution des étapes du procédé de gestion selon l'une quelconque des revendications 1 à 10.

## Patentansprüche

1. Verfahren zur Verwaltung eines Dringlichkeitszustands eines ersten Fahrzeugs (170), das die folgenden Schritte umfasst:
- Empfangen (F310), durch ein Verwaltungssystem (100), einer ersten Meldung (SI) über den Dringlichkeitszustand des ersten Fahrzeugs (170),
- Senden (F360), durch das Verwaltungssystem (100) und an mindestens ein sogenanntes Detektionselement (ED), einer Warnnachricht (MA), wobei sich das mindestens eine sogenannte Detektionselement (ED) an einer Fahrbahn befindet, wobei das mindestens eine Detektionselement (ED) auf der Grundlage mindestens einer potenziellen Route des ersten Fahrzeugs (170) bestimmt wird, wobei die Warnnachricht (MA) ein Element zur Identifizierung des ersten Fahrzeugs umfasst, das die Detektion des ersten Fahrzeugs durch das Detektionselement ermöglicht;
**dadurch gekennzeichnet, dass** es ferner Folgendes umfasst:
- Empfangen (F375), durch das Verwaltungssystem (100), einer Nachricht der Lokalisierung (ML) des ersten Fahrzeugs (170) von dem mindestens ersten Detektionselement (ED),
- Bestätigen (F380), durch das Verwaltungssystem (100), der mindestens einen potenziellen Route als bestätigte Route auf der Grundlage der empfangenen Lokalisierungsnachricht.

2. Verwaltungsverfahren nach Anspruch 1, wobei die erste Meldung ein Informationselement beinhaltet, das sich auf den bestätigten Ankunftsort des ersten Fahrzeugs 170 bezieht, wobei die mindestens eine potenzielle Route des ersten Fahrzeugs 170 auf der Grundlage des bestätigten Ankunftsorts bestimmt wird.

3. Verwaltungsverfahren nach Anspruch 1, das ferner das Senden (F392), durch das Verwaltungssystem (100) und an mindestens ein sogenanntes Ausführungselement (EE), einer Anweisungsnachricht (MI) umfasst, wobei das mindestens eine Ausführungselement (EE) auf der Grundlage der bestätigten Route bestimmt wird.

4. Verwaltungsverfahren nach Anspruch 3, wobei die erste Meldung (SI) ein Informationselement (EI) umfasst, das sich auf die Art der Dringlichkeit des ersten Fahrzeugs (170) bezieht,
wobei das Verfahren ferner einen Schritt (F320) des Bestimmens, durch das Verwaltungssystem (100), der Dringlichkeitsstufe auf der Grundlage des Informationselements, das sich auf die Art der Dringlichkeit bezieht, umfasst,
wobei die Warnnachricht (MA) ein Informationselement umfasst, das sich auf die Dringlichkeitsstufe des ersten Fahrzeugs (170) bezieht, und/oder
wobei die Anweisungsnachricht (MI) das Informationselement umfasst, das sich auf die Dringlichkeitsstufe des ersten Fahrzeugs (170) bezieht.

5. Verwaltungsverfahren nach einem der Ansprüche 1 bis 4, wobei das Bestimmen (F330) mindestens einer potenziellen Route die folgenden Teilschritte umfasst, die durch das Verwaltungssystem (100) implementiert werden:
- Bestimmen eines Abfahrtbereichs des ersten Fahrzeugs (170),
- Bestimmen mindestens eines potenziellen Abfahrtsorts in dem Abfahrtsbereich,
- für jeden potenziellen Abfahrtsort, Bestimmen mindestens einer potenziellen Route anhand des potenziellen Abfahrtsorts.

6. Verwaltungsverfahren nach Anspruch 4, wobei die erste Meldung (SI) ein Informationselement umfasst, das sich auf einen bestätigten Abfahrtsort bezieht,
wobei der Schritt des Bestimmens (F330) mindestens einer potenziellen Route die folgenden Teilschritte umfasst, die durch das Verwaltungssystem (100) implementiert werden:
- Bestimmen mindestens eines potenziellen Ankunftsorts auf der Grundlage des Informationselements, das sich auf den bestätigten Abfahrtsort bezieht, und des Informationselements, das sich auf die Art der Dringlichkeit des ersten Fahrzeugs (170) bezieht,
- für jeden potenziellen Ankunftsort, Bestimmen mindestens einer potenziellen Route anhand des bestätigten Abfahrtsorts und des potenziellen Ankunftsorts.

7. Verwaltungsverfahren nach Anspruch 6, das ferner die folgenden Schritte umfasst:
- Bestimmen (F335), durch das Verwaltungssystem (100), der potenziellen Reisedauer (DTP), die mit der mindestens einen potenziellen Route verbunden ist,
- Bestimmen, durch das Verwaltungssystem (100), eines wahrscheinlichsten Ankunftsorts auf der Grundlage jeder potenziellen Reisedauer (DTP) und/oder eines Informationselements, das sich auf die Kapazität zur Verwaltung der Dringlichkeit am Ankunftsort der mindestens einen potenziellen Route bezieht,
- Übertragen, durch das Verwaltungssystem (100) und an das erste Fahrzeug (170), mindestens einer potenziellen Route, die mit dem wahrscheinlichsten Ankunftsort verbunden ist.

8. Verwaltungsverfahren nach einem der Ansprüche 1 bis 7, wobei das mindestens eine Detektionselement (ED) auf der Grundlage mindestens eines Kontextelements, das sich auf das mindestens eine Detektionselement bezieht, aus der folgenden Liste von Kontextelementen bestimmt wird:
- einer Geolokalisierungsposition,
- einer voraussichtlichen Route,
- einer Geschwindigkeit,
- einer Information über den Verkehr in der Nähe der Geolokalisierungsposition des Detektionselements (ED),
wobei sich das Detektionselement (ED) im Bereich mindestens eines Routenabschnitts der mindestens einen potenziellen Route befinden könnte, wobei der mindestens eine Routenabschnitt durch das erste Fahrzeug (170) während eines vorbestimmten Zeitraums zurückgelegt werden könnte,
wobei das mindestens eine Detektionselement (ED) zu einer Liste von Detektionselementen (ED) hinzugefügt wird, die mit dem mindestens einen Routenabschnitt der mindestens einen potenziellen Route verbunden ist,
wobei der vorbestimmte Zeitraum weniger als fünf Minuten beträgt.

9. Verwaltungsverfahren nach einem der Ansprüche 1 bis 8, das ferner die folgenden Schritte umfasst:
- Detektieren, durch ein mit dem Detektionselement (ED) verbundenes Terminal, der Implementierung mindestens einer Handlungsanweisung der Anweisungsnachricht (MI) durch das mindestens eine Ausführungselement (EE),
- Ableiten, durch das Terminal, einer Wahrscheinlichkeit einer Präsenz des ersten Fahrzeugs (170) auf der Grundlage des Detektierens der Implementierung der mindestens einen Handlungsanweisung der Anweisungsnachricht (MI),
- Senden, durch das Terminal und an das Verwaltungssystem (100), einer zweiten Nachricht der Lokalisierung des ersten Fahrzeugs (170).

10. Verwaltungsverfahren nach Anspruch 8, wobei das mindestens eine Ausführungselement (EE) aus dem mindestens einen Detektionselement (ED) der mindestens einen Liste von Detektionselementen (ED) bestimmt wird.

11. Vorrichtung zur Verwaltung (120, 130) eines Dringlichkeitszustands eines ersten Fahrzeugs (170), die Folgendes umfasst:
- ein Empfangsmodul, das in der Lage ist, eine erste Meldung (SI) über den Dringlichkeitszustand des ersten Fahrzeugs (170) zu empfangen,
- ein Sendemodul, das in der Lage ist, eine Warnnachricht (MA) an mindestens ein sogenanntes Detektionselement (ED) zu senden, das sich an einer Fahrbahn befindet, wobei das mindestens eine Detektionselement (ED) auf der Grundlage mindestens einer potenziellen Route des ersten Fahrzeugs (170) bestimmt wird, wobei die Warnnachricht (MA) ein Element zur Identifizierung des ersten Fahrzeugs umfasst, das die Detektion des ersten Fahrzeugs durch das Detektionselement ermöglicht,
**dadurch gekennzeichnet, dass** sie ferner Folgendes umfasst:
- ein Empfangsmodul, das in der Lage ist, eine Nachricht der Lokalisierung (ML) des ersten Fahrzeugs (170) von dem mindestens ersten Detektionselement (ED) zu empfangen,
- ein Bestätigungsmodul, das in der Lage ist, auf der Grundlage der empfangenen Lokalisierungsnachricht die mindestens eine potenzielle Route als bestätigte Route zu bestätigen.

12. Computerprogramm (P1), das Anweisungen beinhaltet, die bei der Ausführung des Programms durch einen Computer die Schritte des Verwaltungsverfahrens nach einem der Ansprüche 1 bis 10 ausführen.

13. Computerlesbares Speichermedium, auf dem ein Computerprogramm (P1) gespeichert ist, das Anweisungen zur Ausführung der Schritte des Verwaltungsverfahrens nach einem der Ansprüche 1 bis 10 umfasst.

## Claims

1. Method for managing a state of emergency of a first vehicle (170), comprising the following steps:
- reception (F310), by a management system (100), of a first indication (SI) of the state of emergency of the first vehicle (170),
- sending (F360), by the management system (100) and to at least one so-called detection element (ED), of an alert message (MA), said at least one so-called detection element (ED) being located in a traffic lane, said at least one detection element (ED) being determined on the basis of at least one potential itinerary of the first vehicle (170), the alert message (MA) comprising an identification element identifying the first vehicle and allowing the first vehicle to be detected by the detection element;
**characterized in that** it further comprises:
- reception (F375), by the management system (100), of a location message (ML) locating the first vehicle (170), coming from said at least first detection element (ED),
- confirmation (F380), by the management system (100), of said at least one potential itinerary as confirmed itinerary, on the basis of the location message received.

2. Management method according to Claim 1, wherein the first indication comprises an information element relating to the confirmed point of arrival of the first vehicle 170, said at least one potential itinerary of the first vehicle 170 being determined on the basis of said confirmed point of arrival.

3. Management method according to Claim 1, further comprising the sending (F392), by the management system (100) and to at least one so-called execution element (EE), of a message of instructions (MI), said at least one execution element (EE) being determined on the basis of said confirmed itinerary.

4. Management method according to Claim 3, wherein the first indication (SI) comprises an information element (EI) relating to the type of emergency of the first vehicle (170),
the method further comprising a step (F320) of determination, by the management system (100), of the level of emergency on the basis of said information element relating to the type of emergency,
the alert message (MA) comprising an information element relating to the level of emergency of the first vehicle (170), and/or
the message of instructions (MI) comprising the information element relating to the level of emergency of the first vehicle (170).

5. Management method according to any one of Claims 1 to 4, wherein the determination (F330) of at least one potential itinerary comprises the following sub-steps, implemented by the management system (100):
- determination of a starting area of the first vehicle (170),
- determination of at least one potential starting point in the starting area,
- for each potential starting point, determination of at least one potential itinerary, starting from said potential starting point.

6. Management method according to Claim 4, wherein the first indication (SI) comprises an information element relating to a confirmed starting point,
the step (F330) of determining at least one potential itinerary comprising the following sub-steps, implemented by the management system (100):
- determination of at least one potential point of arrival on the basis of said information element relating to the confirmed starting point and of the information element relating to the type of emergency of the first vehicle (170),
- for each potential point of arrival, determination of at least one potential itinerary on the basis of the confirmed starting point and of said potential point of arrival.

7. Management method according to Claim 6, further comprising the following steps:
- determination (F335), by the management system (100), of the potential journey duration (DTP) associated with said at least one potential itinerary,
- determination, by the management system (100), of a most likely point of arrival on the basis of each potential journey time (DTP) and/or of information relating to the management capacity of the emergency services at the point of arrival of said at least one potential itinerary,
- transmission, by the management system (100) and to the first vehicle (170), of at least one potential itinerary associated with the most likely point of arrival.

8. Management method according to any one of Claims 1 to 7, wherein said at least one detection element (ED) is determined on the basis of at least one contextual element relating to said at least one detection element, from amongst the following list of contextual elements:
- a geolocation position,
- a provisional itinerary,
- a speed,
- information related to the traffic in the vicinity of the geolocation position of the detection element (ED),
said detection element (ED) being likely to be located in at least one itinerary portion of said at least one potential itinerary, said at least one itinerary portion being likely to be followed by the first vehicle (170) for a predetermined period of time,
said at least one detection element (ED) being added to a list of detection elements (ED) associated with said at least one itinerary portion of said at least one potential itinerary,
said predetermined period of time being less than five minutes.

9. Management method according to any one of Claims 1 to 8, further comprising the following steps:
- detection, by a terminal associated with said detection element (ED), of the implementation of at least one manoeuvre instruction from the message of instructions (MI) by said at least one execution element (EE),
- deduction, by said terminal, of a probability of the first vehicle (170) being present on the basis of the detection of the implementation of said at least one manoeuvre instruction from the message of instructions (MI),
- sending, by said terminal and to the management system (100), of a second location message locating the first vehicle (170).

10. Management method according to Claim 8, wherein said at least one execution element (EE) is determined from amongst said at least one detection element (ED) from said at least one list of detection elements (ED).

11. Device (120, 130) for managing a state of emergency of a first vehicle (170), comprising:
- a reception module capable of receiving a first indication (SI) of the state of emergency of the first vehicle (170),
- a sending module capable of sending an alert message (MA) to at least one so-called detection element (ED) located in a traffic lane, said at least one detection element (ED) being determined on the basis of at least one potential itinerary of the first vehicle (170), the alert message (MA) comprising an identification element identifying the first vehicle and allowing the first vehicle to be detected by the detection element,
**characterized in that** it further comprises:
- a reception module capable of receiving a location message (ML) locating the first vehicle (170), coming from said at least first detection element (ED),
- a confirmation module capable of confirming said at least one potential itinerary as confirmed itinerary, on the basis of the location message received.

12. Computer program (P1) comprising instructions for executing the steps of the management method according to any one of Claims 1 to 10 when said program is executed by a computer.

13. Computer-readable storage medium on which a computer program (P1) comprising instructions for executing the steps of the management method according to any one of Claims 1 to 10 is stored.
